# EUROPEAN PATENT APPLICATION

(11) **EP 3 312 560 A1**
(43) Date of publication of application: **25.04.2018**
(21) Application number: 16194776.7
(22) Date of filing: 20.10.2016
(51) Int. Cl.: G01C 21/20, G01S 17/93, G01S 5/16

(54) **METHOD AND SYSTEM FOR INDOOR NAVIGATION**

(71) Applicant: Arctic Robotics Oy, 01530 Vantaa (FI)
(72) Inventor: Oksanen, Niko, 03400 Vihti (FI); Isoaho, Pauli, 00430 Helsinki (FI); Smital, Petr, 00200 Helsinki (FI); Mai Vinh, Nguyen, 00240 Helsinki (FI); Vassilyev, Artem, 01350 Vantaa (FI); Ahmad, Bilal, 00810 Helsinki (FI)
(74) Representative: Suominen, Kaisa Liisa

(57) **Abstract**

Disclosed is a method for indoor navigation of a flying device in a premises, the flying device comprising a body and a detector rotatably connected to the body, the method comprising steps of: obtaining an initial location of the flying device with respect to a map co-ordinates of the premises; measuring a first plurality of distances from the detector to a first plurality of objects in the premises; determining a first plurality of rotational angles between the detector and the body for the respective first plurality of measured distances; using the first plurality of distances, the initial location and the first plurality of rotational angles to determine an orientation of the body of the flying device with respect to the map co-ordinates of the premises and to determine a first location of the flying device; measuring a second plurality of distances from the detector to a second plurality of objects in the premises; determining a second plurality of rotational angles between the detector and the body for the respective second plurality of measured distances; and using the second plurality of distances, the second plurality of rotational angles, the first location and the orientation of the body of the flying device with respect to the map co-ordinates for determining a second location of the flying device when navigating in the premises.

## Description

### TECHNICAL FIELD

The present disclosure relates generally to indoor navigation, and more specifically, to a system and a method for indoor navigation of a flying device.

### BACKGROUND

An indoor positioning system (IPS) is a system to locate objects or people inside a building using radio waves, magnetic fields, acoustic signals, or other sensory information collected by mobile devices (e.g. an Unmanned Aerial vehicle). There are several commercial systems on the market, but there is no standard for an IPS system. The IPS systems use different technologies, such as distance measurement to nearby anchor nodes (e.g. nodes with known positions, WiFi access points), magnetic positioning and dead reckoning.

An Unmanned Aerial Vehicle (UAV) is an aircraft without a human pilot aboard. The UAV may operate with various degrees of autonomy, either under remote control by a human operator or fully or intermittently autonomously, by an onboard computer. The unmanned Aerial Vehicle (UAV) may typically not be capable of flying autonomously in indoor environments without any external marker. This is because a typical outdoor navigation sensor such as a Global positioning system (GPS), a barometer, or a magnetometer, which may be used in outdoor environments for autonomously flying the UAV, is not suitable for use in indoor environments, as the outdoor navigation sensor is not aware of the indoor environments and thus may not find a local position of the UAV inside the indoor environments.

Another problem with the UAV lies in determining its nose angle. A manual or an electronic compass cannot be used in indoor environments to detect the nose angle of the UAV due to magnetic interference. To autonomously fly the UAV inside the indoor environments, the UAV should know where its head is positioned. Further, information sensed by the UAV needs to be corrected while navigating inside the indoor environments, as compass data is not available. Still further, the problem associated with the UAV is that there is no available logic for how to switch from autonomous flight to manual control and back when flying the UAV inside indoor environments.

Therefore, in light of the foregoing discussion, there exists a need to overcome the aforementioned drawbacks in existing indoor positioning and navigation systems for determining a nose angle of the UAV accurately and for navigating the UAV inside the indoor environment without using any external markers or sensors.

### SUMMARY

The present disclosure provides a method for indoor navigation of a flying device in a premises, the flying device comprising a body and a detector rotatably connected to the body, the method comprising steps of:
- obtaining an initial location of the flying device with respect to a map co-ordinates of the premises;
- measuring a first plurality of distances from the detector to a first plurality of objects in the premises;
- determining a first plurality of rotational angles between the detector and the body for the respective first plurality of measured distances;
- using the first plurality of distances, the initial location and the first plurality of rotational angles to determine an orientation of the body of the flying device with respect to the map co-ordinates of the premises and to determine a first location of the flying device;
- measuring a second plurality of distances from the detector to a second plurality of objects in the premises;
- determining a second plurality of rotational angles between the detector and the body for the respective second plurality of measured distances; and
- using the second plurality of distances, the second plurality of rotational angles, the first location and the orientation of the body of the flying device with respect to the map co-ordinates for determining a second location of the flying device when navigating in the premises.

The present disclosure also provides a system for indoor navigation of a flying device in a premises, the system comprising:
- a detector that is rotatably connected to a body of the flying device, wherein the detector is configured to
   - obtain an initial location of the flying device with respect to a map co-ordinates of the premises;
   - measure a first plurality of distances from the detector to a first plurality of objects in the premises;
   - determine a first plurality of rotational angles between the detector and the body for the respective first plurality of measured distances;
   - measure a second plurality of distances from the detector to a second plurality of objects in the premises; and
   - determine a second plurality of rotational angles between the detector and the body for the respective second plurality of measured distances; and
- a computer that is communicatively connected to the detector, wherein the computer comprises a processor that is configured to
   - determine an orientation of the body of the flying device with respect to the map co-ordinates of the premises and a first location of the flying device using the first plurality of distances, the initial location and the first plurality of rotational angles; and
   - determine a second location of the flying device using the second plurality of distances, the second plurality of rotational angles, the first location and the orientation of the body of the flying device with respect to the map co-ordinates, when navigating in the premises.

Embodiments of the present disclosure substantially eliminate or at least partially address the aforementioned problems in the prior art, and thus the present disclosure provides a method and system for autonomously navigating the flying device from an original location to a planned location (e.g. from an initial location to a first location or from the first location to a second location, etc. further) in the premises with the help of the detector by dynamically creating a best possible indoor route without using external markers or sensors.

Additional aspects, advantages, features and objects of the present disclosure are made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of a system in accordance with an embodiment of the present disclosure;
FIG. 2 is a functional block diagram of a computer in accordance with an embodiment of the present disclosure;
FIG. 3 is a schematic illustration of a system for measuring a plurality of distances from a detector to a plurality of objects in a premises in accordance with an embodiment of the present disclosure;
FIG. 4 is a schematic illustration of a rotating turret of a detector that illustrates a mechanical logic to rotate a plurality of sensors in accordance with an embodiment of the present disclosure;
FIG. 5 is a schematic illustration of a rotating turret of a detector that comprises a brushless motor in accordance with an embodiment of the present disclosure;
FIG. 6 illustrates a top view of a flying device in accordance with an embodiment of the present disclosure;
FIG. 7 illustrates a perspective view of a flying device in accordance with an embodiment of the present disclosure;
FIG. 8 is a schematic illustration of a flying device that comprises a Lidar and sonar fusion sensor in accordance with an embodiment of the present disclosure;
FIG. 9 illustrates a functional block diagram of a system in accordance with an embodiment of the present disclosure; and
FIG. 10 illustrates an exemplary navigation process of a flying device in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible. For examples, embodiments may be created using software, or using a FPGA(s), or by using an ASIC(s).

The present disclosure provides a method for indoor navigation of a flying device in a premises, the flying device comprising a body and a detector rotatably connected to the body, the method comprising steps of:
- obtaining an initial location of the flying device with respect to a map co-ordinates of the premises;
- measuring a first plurality of distances from the detector to a first plurality of objects in the premises;
- determining a first plurality of rotational angles between the detector and the body for the respective first plurality of measured distances;
- using the first plurality of distances, the initial location and the first plurality of rotational angles to determine an orientation of the body of the flying device with respect to the map co-ordinates of the premises and to determine a first location of the flying device;
- measuring a second plurality of distances from the detector to a second plurality of objects in the premises;
- determining a second plurality of rotational angles between the detector and the body for the respective second plurality of measured distances; and
- using the second plurality of distances, the second plurality of rotational angles, the first location and the orientation of the body of the flying device with respect to the map co-ordinates for determining a second location of the flying device when navigating in the premises.

The method thus provides for an autonomously navigation of the flying device from an original location to a planned location in the premises with the help of the detector, by dynamically creating a best possible indoor route without using any external markers or external sensors. The method for indoor navigation of a flying device in the premises may provide that the flying device navigates in indoor environments (e.g. a campus, a building etc.), in the whole premises. The method enables flight in a planned route autonomously in the indoor environments. The method provides obtaining the initial location of the flying device with respect to the map co-ordinates of the premises to identify a location in the premises. The method is used to identify a pointing nose angle of the flying device. The method is also used to navigate to any known location

(e.g. a charging station) of the flying device without any external sensor or external marker.

Initially, the detector of the flying device measures the plurality of distances (e.g. a distance from the flying device to a point of a wall of the premises) and a plurality of rotational angles (e.g. angles between the location of the flying device and a point of the wall of the premises). The measured plurality of distances, the plurality of rotational angles and the known location with respect to map co-ordinates of the premises are used to determine an accurate location (e.g. an initial location) of the flying device. In an embodiment, the accurate location may be determined by matching distance vectors and angles in respect to a map model of the premises. In another embodiment, the matching of the distance vectors from the flying device may be used to determine a very accurate location. A map representation of the premises may be one of the parameters used to determine the location of the flying device.

The first location of the flying device is updated from time to time to determine a second location of the flying device when the flying device starts to fly. In an embodiment, the second location of the flying device is determined by measuring a plurality of distances to the same walls, different walls or objects in the premises at the plurality of rotational angles between the flying device and a sensor (e.g. a Lidar sensor). The plurality of distances may be used again to match the map of the location to determine the second location of the flying device. In an embodiment, locations of the walls or objects are determined repeatedly to find the location of the flying device. The detector of the flying device may measure the plurality of distances and the plurality of rotational angles during a single revolution of the Lidar sensor with respect to the body of the flying device. The flying device may be tilted or adjusted by comparing the location of the flying device with the measured plurality of distances to objects (e.g. walls).

According to an embodiment, the initial location co-ordinates are obtained by detecting an identification (e.g. using infrared, Bluetooth or NFC) of a docking station for the flying device, the docking station having pre-defined co-ordinates in the map. The docking station may be a charging station where the flying device is initially located. In an embodiment, the flying device may be electrically charged in the charging station. In another embodiment, the flying device may be electrically connected with the charging station at its initial location.

According to another embodiment, the measurement of distances is based on a light detection and ranging device. The light detection and ranging device (e.g. a Lidar sensor) may be a laser range finder, which is mounted on the top of the flying device. The Lidar sensor measures the plurality of distances to the nearest non-transparent surface in a direction where the Lidar sensor is currently pointing. The objects and values are measured as outputs to the computer. In an embodiment, the plurality of distances (e.g. including hundreds of measurements) are measured per second using the Lidar sensor. In an embodiment, the computer is a general purpose computing device having a processor, a memory etc. The computer may be specially configured to act as an on board computer for UAVs, and may include a graphics processor and a plurality of ports such as USB, Ethernet and HDMI.

According to yet another embodiment, the determining of rotational angle between the detector and the body comprises the steps of: obtaining a rotation time of the detector with respect to the body; using at least one calibration point for determining a zero point for a rotation and for starting a timer; and determining the rotational angle by dividing a value of the timer, at a point of time for which the rotation angle is being determined, by the rotation time and multiplying the result by 360 degrees.

According to yet another embodiment, beam breaking is used for determining the at least one calibration point. A beam break sensor may be attached to the flying device to identify a nose angle or a nose point of the flying device that points to the objects (e.g. walls). The beam break sensor identifies the nose point of the flying device when an infrared beam is broken by a pointer in the rotating turret.

According to yet another embodiment, the method further comprises using at least one downward detector for detecting a distance of the flying device from a floor of the premises. According to yet another embodiment, the method further comprises using at least one upward detector for detecting a distance of the flying device to a ceiling of the premises. The upward detector may be connected on top of the flying device to detect the distance of the flying device to the ceiling of the premises. In an embodiment, the premises include indoor environments. According to yet another embodiment, the method further comprises using the at least one upward detector for obstacle avoidance. In an embodiment, the at least one upward detector may be a sonar ultrasound sensor. The method may automatically start using a down pointing sonar sensor to identify the distance between the flying device and the objects when the Lidar sensor fails to identify the distance due to a mirroring surface.

According to yet another embodiment, the method further comprises using one or more sensors selected from a group of an ultrasonic detector and a light detection and ranging device. The ultrasonic detector may be an ultrasound sensor that may be connected to the flying device. The ultrasonic detector may detect and avoid the obstacles when the obstacles are below (or above, or a the side of) the flying device as the ultrasonic detector is connected under the flying device. According to yet another embodiment, the method further comprises using at least one of an accelerometer, a gyroscope, an inertial measurement unit or a camera to update location information of the flying device.

The present disclosure further provides a system for indoor navigation of a flying device in a premises, the system comprising:
- a detector that is rotatably connected to a body of the flying device, wherein the detector is configured to
   - obtain an initial location of the flying device with respect to a map co-ordinates of the premises;
   - measure a first plurality of distances from the detector to a first plurality of objects in the premises;
   - determine a first plurality of rotational angles between the detector and the body for the respective first plurality of measured distances;
   - measure a second plurality of distances from the detector to a second plurality of objects in the premises; and
   - determine a second plurality of rotational angles between the detector and the body for the respective second plurality of measured distances; and
- a computer that is communicatively connected to the detector, wherein the computer comprises a processor that is configured to
   - determine an orientation of the body of the flying device with respect to the map co-ordinates of the premises and a first location of the flying device using the first plurality of distances, the initial location and the first plurality of rotational angles; and
   - determine a second location of the flying device using the second plurality of distances, the second plurality of rotational angles, the first location and the orientation of the body of the flying device with respect to the map co-ordinates, when navigating in the premises.

The advantages of the present system are thus identical to those disclosed above in connection with the present method and the embodiments listed above in connection with the method apply mutatis mutandis to the system. Furthermore, the present system allows flying the flying device in any position (i.e. not only in a horizontal position) and in any direction, thus enhancing the possibilities of use of the flying device.

The system may comprise an indoor positioning, navigation or obstacle avoidance software logic, the computer or a flight controller. The flying device comprises a body and a detector. The detector may comprise a sensor and a rotating turret. The flying device may also comprise the computer. The detector may be communicatively connected to the body of the flying device. In an embodiment, the initial location (e.g. location coordinates xi, yi and zi) of the flying device is when the flying device is at the top of a docking station (e.g. a charging station). The docking station may be located in a known location in the premises. The docking station may comprise an associated identification (ID) to be identified by the flying device. The associated identification may be a near field communication (NFC) based identification, infrared based identification or Bluetooth based identification. In an embodiment, the flying device may be a 360 degree rotatable device. The computer may be an on-board computer of the flying device.

The flying device may comprise at least one 360 degree rotating detector (e.g. a 360 degree rotatable Lidar sensor) to measure distance to objects, a beam break sensor, an Infrared reflector, a magnetic ring, a magnetic encoder, a through bore slip ring, a direct current (DC) motor, a stepper motor or a brushless motor with minimum of 300 revolution per minutes (RPM). In an embodiment, the flying device comprises a 360 degree rotating Lidar sensor (e.g. at least one sensor, but possibly also more, such as two, three or four Lidar sensors) to measure distance to objects, a beam break sensor, an Infrared reflector, a magnetic ring, a magnetic encoder, a through bore slip ring or a brushless motor with a hollow shaft, having a minimum speed of 300 revolutions per minute (RPM).

The computer may comprise a database, a processor and a plurality of modules. The processor may execute the plurality of modules. The plurality of modules may comprise a measurement information collection module, a premises map module, a location estimation module and a destination decision module. The database may store information about a plurality of locations of the flying device (e.g. an initial location, a first location, a second location, a third location etc.). The measurement information collection module is configured to combine distance measurements and rotatable angle measurements measured by the detector. The measurement information collection module may perform tilt correction of the flying device using roll and pitch data received from a flight controller of the flying device. The measurement information collection module may communicate point clouds related to the flying device to a location estimation module at predefined intervals (e.g. usually tens or hundreds of times per second). The premises map module stores a pre-loaded map data of the premises. The map data of the premises comprises coordinates of expected locations of objects (e.g. walls) in the premises and co-ordinates of planned locations (e.g. destination coordinates).

The location estimation module is configured to match the point clouds related to the flying device to the map co-ordinates of the premises. The location estimation module further calculates current location coordinates of the flying device. The location estimation module may communicate the current location co-ordinates of the flying device to the flight controller at predefined intervals (e.g. tens or hundreds of times per second). The destination decision module is configured to determine a route for the flying device to fly based on pre-defined routes, user commands, presence of obstacles, a battery status and other information. The destination decision module further communicates co-ordinates of a planned location and a best possible route to the flight controller to navigate the flying device to the immediate next location. The planned location may be a first location or a second location etc. The flight controller may be a part of the flying device. The flight controller may control motors (e.g. a direct current motor, a stepper motor or a brushless motor) of the flying device. The flight controller may control the flying device to be flown invariably using an inertial measurement unit (IMU), the measurements of distances and rotatable angles, and based on external data on its location and the planned location (e.g. a destination location).

According to an embodiment, the detector is configured to detect an identification of a docking station for the flying device, the docking station having pre-defined co-ordinates in the map. In an embodiment, the computer is configured to detect the identification of the docking station for the flying device to obtain the initial location co-ordinates.

According to yet another embodiment, the system further comprises a beam breaking sensor for determining the at least one calibration point. Function of the beam break sensor has been described above. According to yet another embodiment, the system further comprises at least one downward detector for detecting distance of the flying device from a floor of the premises. According to yet another embodiment, the system further comprises at least one upward detector for detecting a distance of the flying device to a ceiling of the premises.

According to yet another embodiment, the system further comprises one or more sensors selected from a group of an ultrasonic detector and a light detection and ranging device. A function of the ultrasonic detector as has been described above. According to yet another embodiment, the system further comprises at least one of an accelerometer, a gyroscope, an inertial measurement unit or a camera to update location information of the flying device.

A typical computer usable in the present description comprises a processor, a memory, a plurality of buses, a power supply, an external bus interface, a communication interface, an Universal Serial Bus Interface (USB), an application program interface, an Ethernet, a High-Definition Multimedia interface (HDMI) and a graphics processor. The processor and the memory are configurable to store data. The memory may be configured as on-board memory of the processor or in other forms can also include expandable memory such as DDR memory, Flash Memory, EPROM, ROM, or various other forms or any combination thereof generally illustrated as the memory.

The plurality of buses may be configured to couple data and signals to various components within the computer. The computer may also include a single bus, multiple buses or any combination thereof. Indeed, various types of bus configurations may be used as needed or desired including, but not limited to, any combination or portion of a serial bus, a parallel bus, a serial--parallel bus, a universal serial bus, industry standard bus, controller area network bus, a serial peripheral bus, a universal asynchronous receiver transmitter bus, a control bus, standard digital input output bus, inter integrated circuit or any combination thereof.

The computer may also include the external bus interface, the communication interface and the application program interface or any combination thereof configurable to be coupled to the plurality of buses or any combination thereof. Any combination of interfaces may be configured in any combination of hardware, software, or firmware, and can include any combination or portion of a serial bus interface, a parallel bus interface, a serial--parallel bus interface, a universal serial bus interface, industry standard bus interface, controller area network bus interface, a serial peripheral interface, a universal asynchronous receiver transmitter interface, a control bus interface, standard digital input output interface or any combination thereof.

The power supply may capable of providing power to the computer. The Power supply may be an internal power supply and in other forms can be provided external to the computer.

The computer may be configured to use any type or combination of wire line or wireless communication to manage energy use at a site, including, but not limited to, power-line communication, wire line communication, wireless communication, 2G, 3G, 4G or 5G cellular networks, Zigbee based communication, INSETEON based communication, X10 based communication, Z-Wave based communication, Worldwide Interoperability for Microwave Access (WiMAX) based communication, Bluetooth based communication, Wireless Fidelity based communication, 802.11-based communication, 802.15-based communication, 802.16-based communication, proprietary communication, other communications described herein or any combination thereof.

The communication interface may be configured to enable access to communication device, accessible to the computer and having access to a wireless energy network. The communication interface may be configured to detect an outgoing message formatted by the processor and configure the outgoing message to a message bus format that can be coupled to the bus and a communication device. For example, outgoing message can include network device data configured to be output to a wireless energy network, but processed into a message bus format prior to outputting to the communication device. The communication interface may then convert the outgoing message from a message bus format to a format that can be output by a specific communication device. The Universal Serial Bus interface (USB is a set of interface specifications for high speed wired communication between electronics systems peripherals and devices with or without PC/computer. The Ethernet is configured to connect multiple computers to a cable, thereby forming a bus structure. The High-definition multimedia interface (HDMI) is a proprietary audio/video interface for transferring uncompressed video data and compressed or uncompressed digital audio data from an High-definition multimedia interface-compliant source device, such as a display controller, to a compatible computer monitor, video projector, digital television, or digital audio device. The High-definition multimedia interface is a digital replacement for analog video standards. The graphics processor is a specialized electronic component designed to rapidly manipulate and alter memory to accelerate the creation of images in a frame buffer intended for output to a display.

Embodiments of the present disclosure may be used to autonomously navigate a flying device from a local or initial location to a planned location in a premises with the help of the detector by dynamically creating a best possible indoor route without using external markers or external sensors. Further, the embodiments may efficiently use components of the flying device to select a best indoor route to navigate the planned location during flying. Further, the embodiments of the present disclosure may be used in a closed circuit video surveillance, human resource assistance, an alarm and emergency management, a mapping and a logistics. Further, the embodiments of the present disclosure may control the flying device in the indoor environments without using any external sensors or markers, and may be used for human detection and pre-defined alarm handling actions.

### DETAILED DESCRIPTION OF THE DRAWINGS

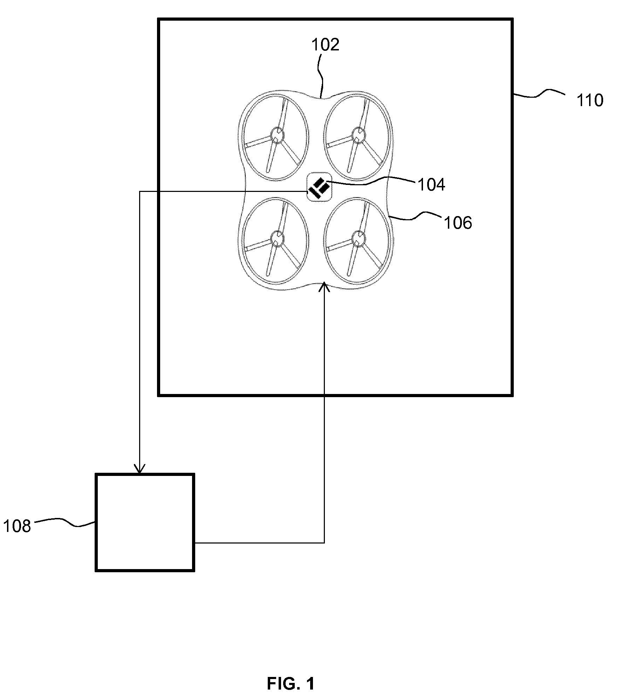

FIG. 1 is a schematic illustration of a system in accordance with an embodiment of the present disclosure. The system comprises a flying device **102** and a computer **108.** The flying device **102** comprises a detector **104** and a body **106.** The detector **104** is rotatably connected to the body **106.**

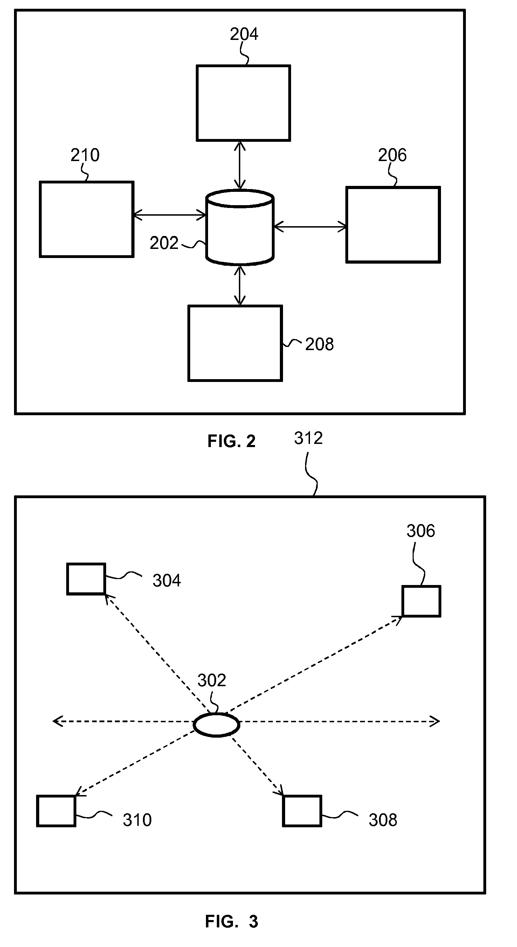

FIG. 2 is a functional block diagram of a computer in accordance with an embodiment of the present disclosure. The computer may comprise a machine-readable data storage media **202** and at least one module. The computer may comprise a processor that executes the at least one module. The at least one module comprises a measurement information collection module **204,** a premises map module **206,** a location estimation module **208** and a destination decision module **210.** These modules function as has been described above.
FIG. 3 is a schematic illustration of a system for measuring a plurality of distances from a detector **302** to a plurality of objects **304, 306, 308** and **310** in a premises **312** in accordance with an embodiment of the present disclosure. The system comprises the detector **302** that is rotatably connected to a body of a flying device. The detector **302** measures the plurality of distances (e.g. a first plurality of distances or a second plurality of distances) between from the detector **302** to the plurality of objects **304, 306, 308** and **310.** The detector **302** determines a plurality of rotational angles between the detector **302** and the body for the respective plurality of measured distances. The detector **302** may measure tens or hundredths of distances and rotational angles during a revolution of the detector **302** with respect to the body of the flying device.

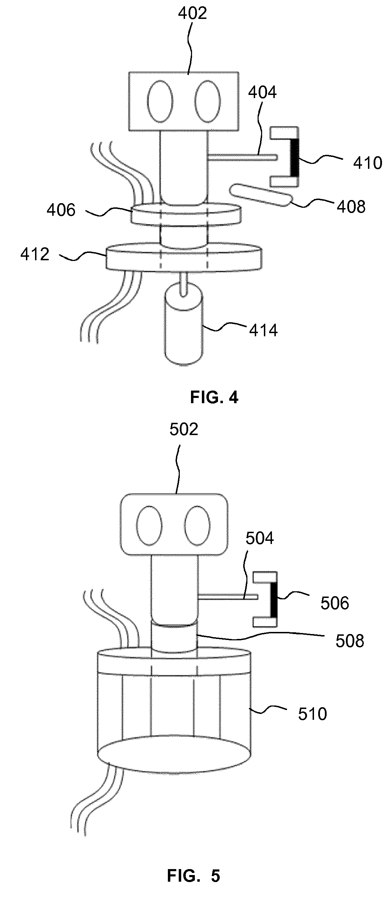

FIG. 4 is a schematic illustration of a rotating turret of a detector that illustrates a mechanical logic to rotate a plurality of sensors **402** in accordance with an embodiment of the present disclosure. The rotating turret comprises a pointer or beam breaker **404,** a magnetic ring **406,** a magnetic ring encoder **408,** a beam break sensor, in this case an infrared (IR) reflector **410,** a through bore slip ring **412** and a motor **414.** The plurality of sensors **402** may be mounted on a top of the detector. The plurality of sensors **402** measures a plurality of distances from the detector to a plurality of objects in a premises. The beam break sensor **410** determines at least one calibration point for determining a zero point for a rotation and for starting a timer to determine a plurality of rotational angles between the detector and the body for a plurality of measured distances. The beam break sensor **410** the magnetic ring **406** and the magnetic ring encoder **408** may be used to identify a nose angle (e.g. a pointing angle of the flying device) of the flying device. The IR reflector **410** reflects a beam emitted by the pointer **404** to identify the nose angle of the flying device. The through bore slip ring **412** transmits power and data from an energy source to the rotating turret. The motor **414** (e.g. a direct current motor) rotates the rotating turret to provide 360 degree rotation to the plurality of sensors **402** to measure the plurality of distances from the plurality of sensors **402** to a plurality of objects in the premises.
FIG. 5 is a schematic illustration of a rotating turret of a detector that comprises a brushless motor **510** in accordance with an embodiment of the present disclosure. The rotating turret a plurality of sensors **502,** a pointer **504,** an IR reflector **506,** a through bore slip ring **508** and the brushless motor **510.** The brushless motor **510** rotates the rotating turret to provide 360 degree rotation to measure the plurality of distances from the detector to a plurality of objects in a premises. The function of the plurality of sensors **502,** the pointer**504,** the IR reflector **506** and the through bore slip ring **508** as has been described above.

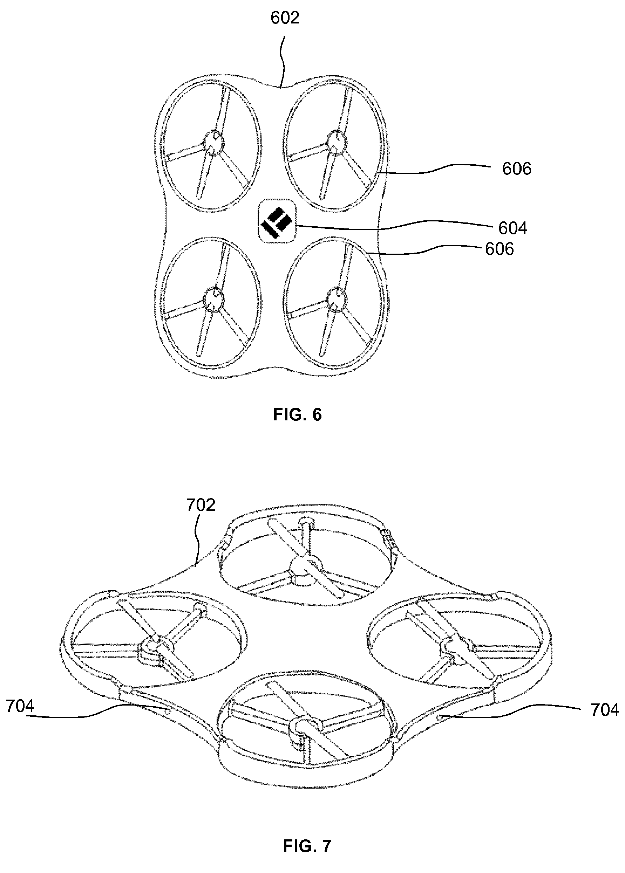

FIG. 6 illustrates a top view of a flying device **602** in accordance with an embodiment of the present disclosure. The flying device **602** comprises a detector **604** and a plurality of flying wheels **606.** The function of the detector **604** as has been described above. The plurality of flying wheels **606** provides upward thrust to the flying device **602** when navigating from an initial location (e.g. a location of a docking station) to a planned location (e.g. a first location or a second location etc.).
FIG. 7 illustrates a perspective view of a flying device **702** in accordance with an embodiment of the present disclosure. The flying device **702** comprises a plurality of sonar ultrasound sensors **704.** The plurality of sonar ultrasound sensors **704** may further assist the flying device **702** to avoid obstacles when the obstacles are present below a detector of the flying device **702.** The plurality of sonar ultrasound sensors **704** communicates information related to obstacles to a computer (e.g. an on-board computer). The computer analyses information related to obstacles and provides commands or signal to the flying device **702** to avoid the obstacles.

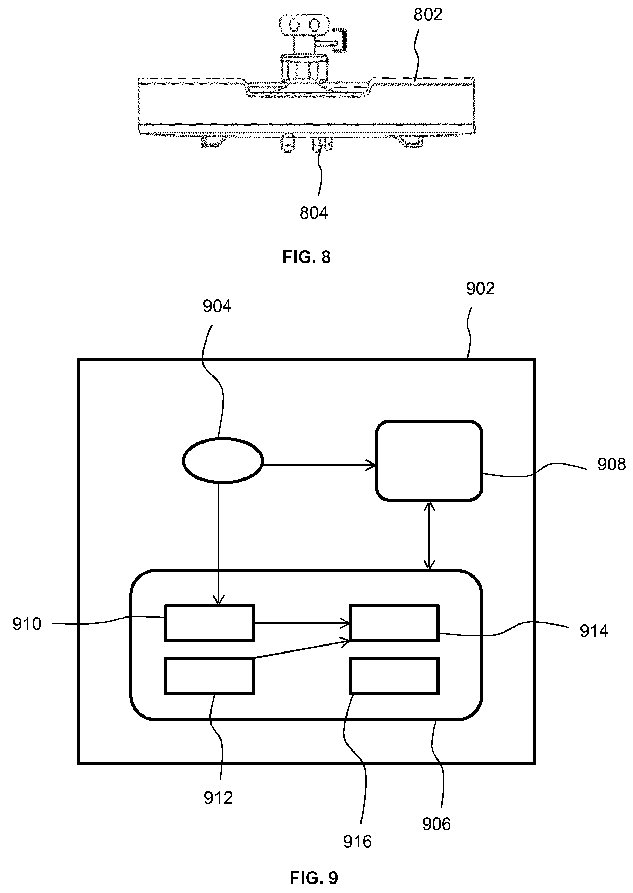

FIG. 8 is a schematic illustration of a flying device **802** that comprises a Lidar and sonar fusion sensor **804** in accordance with an embodiment of the present disclosure. The Lidar and sonar fusion sensor **804** may be mounted on a bottom of the flying device **802.** The Lidar and sonar fusion sensor **804** may be pointed downwards for measuring altitude.
FIG. 9 illustrates a functional block diagram of a system **902** in accordance with an embodiment of the present disclosure. The system **902** comprises a detector **904,** a computer **906** and a flight controller **908.** The detector **904** may comprise a sensor and a rotating turret. The computer **906** comprises a measurement information collection module **910,** a premises map module **912,** a location estimation module **914** and a destination decision module **916.** These parts and modules function as has been described above.

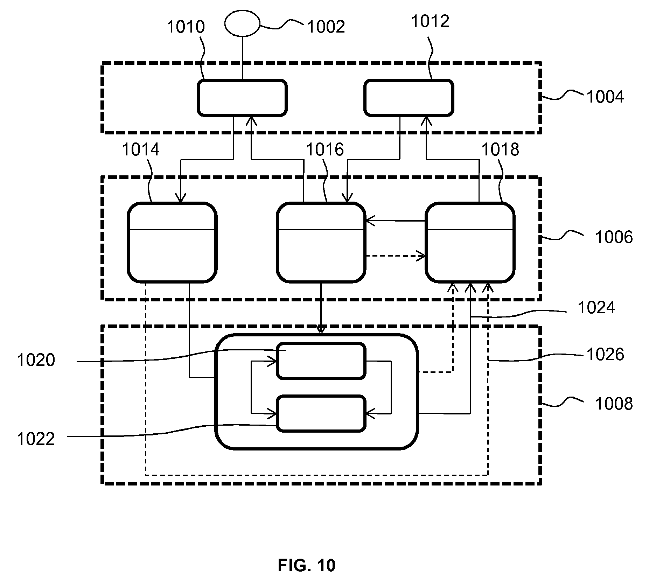

FIG. 10 illustrates an exemplary navigation process of a flying device in accordance with an embodiment of the present disclosure. The flying device may be navigated from one location to other. The navigation process of the flying device for navigating one location to other comprises a disarmed stage **1004,** a landing and taking off stage **1006** and a 3-Dimensional general flight stage **1008.** The flying device may start navigate from a start point **1002.** At the disarmed stage **1004,** the flying device may be initially located or landed on a docking station **1010** (e.g. a charging station) or a ground station **1012** of the disarmed stage **1004.** At the landing and taking off stage **1006,** the flying device may take off from the docking station **1010** or the ground station **1012.** The flying device may navigate through the landing and taking off stage **1006** to the 3-Dimensional general flight stage **1008** to reach a planned location based on measurements received by a flight controller. The flying device may track a current location precisely in the landing and taking off stage **1006.** The flying device may navigate from a base station **1014** or a taking off station **1016** of the landing and taking off stage **1006** to a landing on ground station **1018** of the landing and taking off stage **1006** when a hardware or software problem is detected in the flying device. At the 3D general flight stage **1008,** the flying device allows a user to switch over from a manual control mode **1020** to an autonomous control mode **1022** and vice versa. The flying device may switch over from the manual control mode **1020** to the autonomous control mode **1022** when a battery level is low. The flying device may be landed on the ground station **1012** when a hardware or software in the flying device fails during navigation. The flying device may navigate normally from at least one stage to another through regular mode transitions **1024.** The flying device may navigate from the at least one stage to another through irregular mode transitions **1026** when the flying device is affected by a failure of the hardware or software of the flying device.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method for indoor navigation of a flying device in a premises, the flying device comprising a body and a detector rotatably connected to the body, the method comprising steps of:
- obtaining an initial location of the flying device with respect to a map co-ordinates of the premises;
- measuring a first plurality of distances from the detector to a first plurality of objects in the premises;
- determining a first plurality of rotational angles between the detector and the body for the respective first plurality of measured distances;
- using the first plurality of distances, the initial location and the first plurality of rotational angles to determine an orientation of the body of the flying device with respect to the map co-ordinates of the premises and to determine a first location of the flying device;
- measuring a second plurality of distances from the detector to a second plurality of objects in the premises;
- determining a second plurality of rotational angles between the detector and the body for the respective second plurality of measured distances; and
- using the second plurality of distances, the second plurality of rotational angles, the first location and the orientation of the body of the flying device with respect to the map co-ordinates for determining a second location of the flying device when navigating in the premises.

2. A method according to claim 1, wherein the initial location co-ordinates are obtained by detecting an identification of a docking station for the flying device, the docking station having pre-defined co-ordinates in the map.

3. A method according to any of the preceding claims, wherein the measurement of distances is based on a light detection and ranging device.

4. A method according to any of the preceding claims, wherein the determining of rotational angle between the detector and the body comprises steps of:
- obtaining a rotation time of the detector with respect to the body;
- using at least one calibration point for determining a zero point for a rotation and for starting a timer; and
- determining the rotational angle by dividing a value of the timer, at a point of time for which the rotation angle is being determined, by the rotation time and multiplying the result by 360 degrees.

5. A method according to claim 4, wherein beam breaking is used for determining the at least one calibration point.

6. A method according to any of the preceding claims, wherein the method further comprises using at least one downward detector for detecting a distance of the flying device from a floor of the premises.

7. A method according to claim 6, wherein the at least one downward detector is used for obstacle avoidance.

8. A method according to any of the preceding claims, wherein the method further comprises using at least one upward detector for detecting a distance of the flying device to a ceiling of the premises.

9. A method according to claim 8, wherein the at least one upward detector is used for obstacle avoidance.

10. A system for indoor navigation of a flying device in a premises, the system comprising:
- a detector that is rotatably connected to a body of the flying device, wherein the detector is configured to
- obtain an initial location of the flying device with respect to a map co-ordinates of the premises;
- measure a first plurality of distances from the detector to a first plurality of objects in the premises;
- determine a first plurality of rotational angles between the detector and the body for the respective first plurality of measured distances;
- measure a second plurality of distances from the detector to a second plurality of objects in the premises; and
- determine a second plurality of rotational angles between the detector and the body for the respective second plurality of measured distances; and
- a computer that is communicatively connected to the detector, wherein the computer comprises a processor that is configured to
- determine an orientation of the body of the flying device with respect to the map co-ordinates of the premises and a first location of the flying device using the first plurality of distances, the initial location and the first plurality of rotational angles; and
- determine a second location of the flying device using the second plurality of distances, the second plurality of rotational angles, the first location and the orientation of the body of the flying device with respect to the map co-ordinates, when navigating in the premises.

11. A system according to claim 10, wherein the system further comprises a beam breaking sensor for determining the at least one calibration point.

12. A system according to claim 10 or 11, wherein the system further comprises at least one downward detector for detecting a distance of the flying device from a floor of the premises.

13. A system according to any of the claims 10-12, wherein the system further comprises at least one upward detector for detecting a distance of the flying device from a ceiling of the premises.

14. A system according to claim 12 or 13, wherein the detector is selected from group of an ultrasonic detector and a light detection and ranging device.

15. A system according to any of the claims 10-14, wherein the system further comprises at least one of an accelerometer, a gyroscope, an inertial measurement unit or a camera to update location information of the flying device.
